(19) Europäisches Patentamt
European Patent Office
Office européen des brevets

(11) **EP 4 524 274 A1**

(12) **EUROPEAN PATENT APPLICATION**
published in accordance with Art. 153(4) EPC

(43) Date of publication:
**19.03.2025 Bulletin 2025/12**

(21) Application number: 23823920.6

(22) Date of filing: **13.06.2023**

(51) International Patent Classification (IPC):
***C22C 21/00*** (2006.01)    ***F28F 21/08*** (2006.01)
***B23K 35/28*** (2006.01)

(52) Cooperative Patent Classification (CPC):
**B23K 35/28; C22C 21/00; F28F 21/08**

(86) International application number:
**PCT/JP2023/021898**

(87) International publication number:
**WO 2023/243630 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022 JP 2022098173**

(71) Applicant: UACJ Corporation
Chiyoda-ku
Tokyo 100-0004 (JP)

(72) Inventors:
• **NAKAMURA, Shinichi**
  **Tokyo 100-0004 (JP)**
• **TOTANI, Yuki**
  **Tokyo 100-0004 (JP)**
• **DOKO, Takeyoshi**
  **Tokyo 100-0004 (JP)**

(74) Representative: **Kramer Barske Schmidtchen
Patentanwälte PartG mbB
European Patent Attorneys
Landsberger Strasse 300
80687 München (DE)**

(54) **SINGLE-LAYER ALUMINUM ALLOY MATERIAL FOR BRAZING, METHOD FOR PRODUCING SAME, ALUMINUM STRUCTURE, AND HEAT EXCHANGER**

(57)    An aluminum-alloy monolayer material for brazing (1) has a chemical composition that contains: Si: 2.0 mass% or more and 3.0 mass% or less; Fe: 0.05 mass% or more and 0.40 mass% or less; Cu: 0.05 mass% or more and 0.25 mass% or less; Mn: 0.8 mass% or more and 1.6 mass% or less; and Zn: 1.0 mass% or more and 3.0 mass% or less, the balance being Al and unavoidable impurities; wherein: the ratio Fe/Cu of the Fe content to the Cu content is 1.2 or more and 5.0 or less; the total of the Fe content and the Cu content is 0.25 mass% or more and 0.65 mass% or less; and the ratio Cu/Zn of the Cu content to the Zn content is 0.02 or more and 0.40 or less.

FIG. 1

EP 4 524 274 A1

## Description

TECHNICAL FIELD

The present invention relates to an aluminum-alloy monolayer material for brazing, a method of manufacturing the same, an aluminum structure, and a heat exchanger.

BACKGROUND ART

For example, aluminum products, such as heat exchangers and the like, comprise numerous members composed of aluminum or aluminum alloy. These members may be joined to each other by brazed joints. As previously existing methods of brazing structural members of an aluminum product to each other, methods in which a filler material is disposed at a portion at which a brazed joint is to be formed, methods in which a brazing paste that includes Si powder is applied to a portion at which a brazed joint is to be formed and filler is produced from the structural members by the brazing paste, methods in which brazing is performed using a brazing sheet that comprises a core material and a filler material provided on at least one face of the core material, and the like are known.

In addition, in recent years, a monolayer, aluminum-alloy material has been proposed that is constituted such that it can be brazed to an opposing material by producing a minute amount of melt by heating. As an aluminum-alloy material of this type, in Patent Document 1, for example, a monolayer, aluminum-alloy material is disclosed that contains Si: 1.0 mass%-5.0 mass% and Fe: 0.01 mass%-2.0 mass% and further contains one or two or more selected from Mg: 2.0 mass% or less, Cu: 1.5 mass% or less, and Mn: 2.0 mass% or less, the balance being Al and unavoidable impurities.

PRIOR ART LITERATURE

Patent Document

Patent Document 1
Japanese Patent No. 5337326

SUMMARY OF THE INVENTION

PROBLEMS TO BE SOLVED BY THE INVENTION

However, there is still room for improvement in the aluminum-alloy material of Patent Document 1 in terms of increasing the strength thereof at high temperatures while ensuring brazeability, and in terms of further increasing the corrosion resistance of an aluminum structure that contains the aluminum-alloy material.

The present invention was conceived in view of this background and has an object of providing: an aluminum-alloy monolayer material for brazing that has superior brazeability, has high strength at high temperatures, and is capable of increasing corrosion resistance of an aluminum structure; a method of manufacturing the same; an aluminum structure that comprises this aluminum-alloy monolayer material for brazing; and a heat exchanger.

MEANS FOR SOLVING THE PROBLEMS

One aspect of the present invention is an aluminum-alloy monolayer material for brazing having: a chemical composition that contains: Si (silicon): 2.0 mass% or more and 3.0 mass% or less; Fe (iron): 0.05 mass% or more and 0.40 mass% or less; Cu (copper): 0.05 mass% or more and 0.25 mass% or less; Mn (manganese): 0.8 mass% or more and 1.6 mass% or less; and Zn (zinc): 1.0 mass% or more and 3.0 mass% or less, the balance being Al (aluminum) and unavoidable impurities;
wherein:

the ratio of the Fe content to the Cu content is 1.2 or more and 5.0 or less;
the total of the Fe content and the Cu content is 0.25 mass% or more and 0.65 mass% or less; and
the ratio of the Cu content to the Zn content is 0.02 or more and 0.40 or less.

EFFECTS OF THE INVENTION

The aluminum-alloy monolayer material for brazing (hereinbelow referred to as "the aluminum material" or "the aluminum-alloy material") has a chemical composition such that the Si, Fe, Cu, Mn, and Zn contents thereof are respectively within the above-mentioned specific ranges, and, in addition, the ratio of the Fe content and the Cu content, the total of the Fe content and the Cu content, and the ratio of the Cu content and the Zn content are respectively within the above-mentioned specific ranges. The aluminum material can thereby improve brazeability, strength at high temperatures, and corrosion resistance of an aluminum structure in a well-balanced manner.

Accordingly, according to the above-mentioned aspect, an aluminum-alloy monolayer material for brazing that has superior brazeability, has high strength at high temperatures, and can increase corrosion resistance of an aluminum structure can be provided.

BRIEF DESCRIPTION OF THE DRAWINGS

FIG. 1 is a cross-sectional view of a monolayer aluminum-alloy material for brazing according to the working examples.
FIG. 2 is an oblique view of a mini-core test specimen according to the working examples.
FIG. 3 is an explanatory diagram of a measuring apparatus of a natural electrode potential according to the working examples.

MODES FOR CARRYING OUT THE INVENTION

(Aluminum-Alloy Monolayer Material for Brazing)

The aluminum-alloy monolayer material for brazing is constituted from a single layer of an aluminum alloy having the above-mentioned chemical composition. The chemical composition of the aluminum material and the reasons for the limitations thereupon will now be explained.

• Si

2.0 mass% or more and 3.0 mass% or less of Si is contained in the aluminum material as an essential component. By setting the Si content in the aluminum material to 2.0 mass% or more, a melt that contains Al and Si is produced by brazing heating, and the aluminum material and an opposing material can be joined thereby. The Si content is preferably 2.2 mass% or more and is more preferably 2.3 mass% or more. In this situation, the amount of melt produced by brazing heating is made greater, and thereby brazeability can be further improved. In the situation in which the Si content is less than 2.0 mass%, there is a risk that the amount of melt produced by brazing heating will be insufficient, which will lead to degradation in brazeability.

On the other hand, if the Si content becomes excessively large, there is a risk that the amount of aluminum material that melts during brazing heating will become too large, which will lead to a decrease in the strength of the aluminum material. As a result, there is a risk that the shape of a structure that contains the aluminum material will no longer be able to be maintained during brazing. From the viewpoint of avoiding such a problem, the Si content is made to be 3.0 mass% or less. From the same viewpoint, the Si content is preferably made to be 2.8 mass% or less and more preferably made to be 2.6 mass% or less.

In addition, from the viewpoint of improving brazeability while ensuring the strength of the aluminum material during brazing, the Si content is preferably 2.2 mass% or more and 2.8 mass% or less and is more preferably 2.3 mass% or more and 2.6 mass% or less.

• Fe, Cu, Zn

0.05 mass% or more and 0.40 mass% or less of Fe, 0.05 mass% or more and 0.25 mass% or less of Cu, and 1.0 mass% or more and 3.0 mass% or less of Zn are contained in the aluminum material as essential components. In addition, the Fe, Cu, and Zn contents satisfy three relationships: (1) the ratio of the Fe content to the Cu content (i.e., the value of Fe/Cu) is 1.2 or more and 5.0 or less; (2) the total of the Fe content and the Cu content (i.e., the value of Fe + Cu) is 0.25 mass% or more and 0.65 mass% or less; and (3) the ratio of the Cu content to the Zn content (i.e., the value of Cu/Zn) is 0.02 or more and 0.40 or less.

A portion of the Fe forms a solid solution in the Al matrix and thereby acts to increase the strength of the aluminum material. In addition, the balance of the Fe is dispersed in the Al matrix as crystallized products and acts to increase the strength of the aluminum material at room temperature and at high temperatures. Furthermore, Fe acts to promote refinement of the crystal grains of the aluminum material. By promoting refinement of the crystal grains of the aluminum material, melt will readily tend to seep out from the crystal-grain boundaries during brazing heating, and brazeability can be improved thereby. However, if the Fe content becomes excessively large, then coarse intermetallic compounds will readily tend to form during casting, and there is a risk that this will lead to a decrease in the manufacturability of the aluminum material.

Meanwhile, Cu forms a solid solution in the Al matrix and thereby acts to increase the strength of the aluminum material. In addition, Cu, like Fe, acts to promote refinement of the crystal grains of the aluminum material. However, if the Cu content becomes excessively large, there is a risk that the amount of melt produced from the aluminum material during brazing heating will become excessively large, which will lead to a decrease in strength at high temperatures. In addition, in this situation, there is also a risk that the electric potential of the aluminum material will increase, leading to a decrease in the corrosion resistance of an aluminum structure that contains the aluminum material.

Therefore, by making the Fe content and the Cu content to be within the above-mentioned specific ranges and, furthermore, making the ratio of the Fe content to the Cu content and the total of the Fe content and the Cu content to be within the above-mentioned specific ranges, it is possible to increase the strength of the aluminum material at high temperatures while avoiding a decrease in the manufacturability of the aluminum material and while avoiding a decrease in the corrosion resistance of the aluminum structure. From the viewpoint of obtaining such functions and effects more reliably, the ratio of the Fe content to the Cu content is preferably 1.2 or more and 4.0 or less.

Meanwhile, in situations in which the aluminum material is used, for example, in a heat-exchanger fin, the fin may be machined post-brazing. However, if the post-brazing strength of the aluminum material becomes excessively high, then there is a risk that this will lead to a decrease in formability. From the viewpoint of more easily avoiding such a problem, the total of the Fe content and the Cu content is preferably 0.25 mass% or more and 0.60 mass% or less, more preferably 0.25 mass% or more and 0.55 mass% or less, and yet more preferably 0.25 mass% or more and 0.50 mass% or less.

In addition, Cu is effective for improving the brazeability and increasing the strength of the aluminum material, as described above, while also acting to increase the electric potential of the aluminum material. Therefore, if the Cu content becomes excessively large, then there is a risk that the aluminum material will cease to function as a sacrificial anode, leading to problems such as corrosion resistance of the aluminum structure readily tending to decrease and the brazed joint formed between the aluminum material and the opposing material readily tending to corrode.

Meanwhile, Zn as well acts to increase the amount of melt produced from the aluminum material. Furthermore, because Zn acts to reduce the electric potential of the aluminum material, it is possible, by adding the Zn along with Cu, to improve brazeability while avoiding an excessive increase in the electric potential of the aluminum material. However, if the Zn content becomes excessively large, then there is a risk that the electric potential of the aluminum material will decrease excessively, and the aluminum material itself will readily tend to corrode thereby.

Therefore, by respectively making the Cu content and the Zn content to be within the above-mentioned specific ranges and, furthermore, making the ratio of the Cu content to the Zn content to be within the above-mentioned specific range, it is possible to improve brazeability while avoiding a decrease in corrosion resistance and a decrease in the self-corrosion resistance of the aluminum structure. From the viewpoint of more reliably obtaining such functions and effects, the ratio of the Cu content to the Zn content is preferably 0.02 or more and 0.10 or less and more preferably 0.02 or more and 0.08 or less.

By respectively making the Fe, Cu, and Zn contents to be within the above-mentioned specific ranges and, furthermore, causing the Fe, Cu, and Zn contents to satisfy relationships (1)-(3) as described above, the brazeability and strength at high temperatures of the aluminum material and the corrosion resistance of the aluminum structure can be increased in a balanced manner.

• Mn

0.8 mass% or more and 1.6 mass% or less of Mn is contained in the aluminum material as an essential component. A portion of the Mn forms Al-Mn-Si-series intermetallic compounds in the aluminum material, and thereby acts to increase the strength of the aluminum material owing to dispersion strengthening. In addition, the balance of the Mn forms a solid solution in the Al matrix, and thereby acts to increase the strength of the aluminum material owing to solid solution strengthening.

By making the Mn content in the aluminum material to be 0.8 mass% or more, the strength of the aluminum material can be increased owing to dispersion strengthening and solid solution strengthening. Furthermore, a decrease in the strength of the aluminum material during brazing heating can be curtailed owing to the above-mentioned dispersion strengthening and the solid solution strengthening, and thereby the occurrence of deformation, buckling, or the like of the aluminum material can be curtailed. In the situation in which the Mn content is less than 0.8 mass%, the strength-increasing effect of the Mn will become low and, as a result, there is a risk that deformation, buckling, or the like of the aluminum material will tend to occur.

On the other hand, in the situation in which the Mn content is excessively large, coarse intermetallic compounds will readily tend to form in the process of manufacturing the aluminum material. If rolling is performed with these coarse intermetallic compounds contained as is, then there is a risk that pinholes will readily tend to occur. From the viewpoint of easily avoiding such a problem, the Mn content is made to be 1.6 mass% or less.

In addition to the essential components, Al, and unavoidable impurities described above, elements such as Mg (magnesium), Cr (chromium), Ti (titanium), Zr (zirconium), In (indium), Sn (tin), V (vanadium), Ni (nickel), Be (beryllium), Sr (strontium), Bi (bismuth), and Na (sodium) may be contained in the aluminum material as optional components.

• Mg

Greater than 0 mass% and 2.0 mass% or less of Mg may be contained in the aluminum material as an optional component. Mg forms $Mg_2Si$ in the post-brazing aluminum material, and thereby acts to increase the strength of the aluminum material owing to age hardening. On the other hand, if the Mg content becomes excessively large, then there is a risk that, in the situation that brazing is performed using flux, the Mg and the flux will react, which will lead to a decrease in brazeability. By making the Mg content to be greater than 0 mass% and 2.0 mass% or less, the strength of the aluminum material can be increased while easily avoiding such a problem.

• Cr

Greater than 0 mass% and 0.3 mass% or less of Cr may be contained in the aluminum material as an optional component. A portion of the Cr forms Al-Cr-series intermetallic compounds in the aluminum material, and thereby acts to increase the strength of the aluminum material owing to dispersion strengthening. In addition, the balance of the Cr forms a solid solution in the Al matrix, and thereby acts to increase the strength of the aluminum material owing to solid solution strengthening. On the other hand, if the Cr content becomes excessively large, coarse intermetallic compounds will readily tend to form in the process of manufacturing the aluminum material, and thereby there is a risk that this will lead to a decrease in plastic workability.

By making the Cr content in the aluminum material to be within the above-mentioned specific range, it is possible to further increase the strength of the aluminum material owing to dispersion strengthening and solid solution strengthening while avoiding the formation of coarse Al-Cr-series intermetallic compounds.

• Ti, V

One or two elements selected from the group consisting of greater than 0 mass% and 0.3 mass% or less of Ti and greater than 0 mass% and 0.3 mass% or less of V may be contained in the aluminum material as an optional component or optional components. Ti and V form solid solutions in the Al matrix, and thereby act to increase the strength of the aluminum material. In addition, the Ti and V are distributed in a stratified manner throughout the aluminum material, and act to curtail the advancement of corrosion in the thickness direction of the aluminum material. On the other hand, if the Ti content or the V content becomes excessively large, then very large crystallized products will readily tend to form in the process of manufacturing the aluminum material, and thereby there is a risk that this will lead to a decrease in plastic workability.

By making the Ti content and the V content in the aluminum material to be within the above-mentioned specific ranges, it is possible to further increase the strength and improve self-corrosion resistance of the aluminum material while avoiding the formation of very large crystallized products.

• Zr

Greater than 0 mass% and 0.3 mass% or less of Zr may be contained in the aluminum material as an optional component. Zr forms Al-Zr-series intermetallic compounds in the aluminum material, and thereby acts to increase the strength of the aluminum material owing to dispersion strengthening. In addition, the Al-Zr-series intermetallic compounds act to make the crystal grains of the aluminum material coarser during brazing heating. On the other hand, if the Zr content becomes excessively large, then coarse intermetallic compounds will readily tend to form in the process of manufacturing the aluminum material, and thereby there is a risk that this will lead to a decrease in plastic workability.

By making the Zr content in the aluminum material to be within the above-mentioned specific range, it is possible to obtain the effects described above while avoiding the formation of coarse intermetallic compounds.

• Sn, In

One or two elements from among greater than 0 mass% and 0.3 mass% or less of Sn and greater than 0 mass% and 0.3 mass% or less of In may be contained in the aluminum material as an optional component or optional components. Sn and In, like Zn, act to reduce the electric potential of the aluminum material. By making the Sn content and the In content in the aluminum material to be within the above-mentioned specific ranges, the electric potential of the aluminum material can be adjusted while avoiding a decrease in self-corrosion resistance, and thereby corrosion resistance of the aluminum structure can be further increased.

• Ni

Greater than 0 mass% and 2.0 mass% or less of Ni may be contained in the aluminum material as an optional component. Ni forms intermetallic compounds in the aluminum material, and thereby acts to increase the post-brazing strength of the aluminum material owing to dispersion strengthening. On the other hand, if the Ni content becomes excessively large, then coarse intermetallic compounds will readily tend to form in the process of manufacturing the aluminum material, and thereby there is a risk that this will lead to a decrease in plastic workability. In addition, in this situation, there is also a risk that this will lead to a decrease in self-corrosion resistance of the aluminum material. By making the Ni content in the aluminum material to be greater than 0 mass% and 2.0 mass% or less and preferably to be 0.05 mass% or more and 2.0 mass% or less, it is possible to further increase the strength of the aluminum material while easily avoiding the problems described above.

• Be, Sr, Bi, Na

One or two or more elements from among greater than 0 mass% and 0.3 mass% or less of Be, greater than 0 mass% and 0.3 mass% or less of Sr, greater than 0 mass% and 0.3 mass% or less of Bi, and greater than 0 mass% and 0.3 mass% or less of Na may be contained in the aluminum material. Owing to these elements promoting refinement of the Si particles in the aluminum material and, in addition, improving the fluidity of the melt produced from the aluminum material during brazing heating, they act to improve brazeability. On the other hand, in situations in which the content of these elements is excessively large, there is a risk that this will lead to a decrease in the corrosion resistance of the aluminum material.

By respectively making the Be content, the Sr content, the Bi content, and the Na content to be within the above-mentioned specific ranges, it is possible to further improve the brazeability of the aluminum material while avoiding a decrease in corrosion resistance.

• Metallographic Structure

The aluminum material has a metallographic structure constituted from a non-fibrous structure. It is noted that non-fibrous structure refers to a structure other than a fibrous structure (that is, a structure constituted from fibrous crystal grains that are formed by elongation work and extend in the processing direction). Non-fibrous structures include, for example, a structure constituted from granular crystal grains. Whether or not the metallographic structure of the aluminum material is a non-fibrous structure can easily determined by a person skilled in the art.

The average crystal grain size of the aluminum material is preferably 100 $\mu$m or more and 1,000 $\mu$m or less and more preferably 200 $\mu$m or more and 900 $\mu$m or less. In this situation, the number density of crystal-grain boundaries in the aluminum material can be suitably increased. When the aluminum material and the opposing material will be joined, the melt produced from the aluminum material moves through the interior of the aluminum material principally via the crystal-grain boundaries and is supplied to the surface of the aluminum material. Therefore, by suitably increasing the number density of crystal-grain boundaries in the aluminum material, it is possible to further improve the brazeability of the aluminum material.

(Manufacturing Method)

A method of manufacturing the aluminum material may be embodied in various forms. For example, the aluminum material may be an elongated material that has been subjected to elongation work or a forged material that has been subjected to forging. In addition, the aluminum material may also be a cast product obtained by casting.

From the viewpoint of improving brazeability and strength, the aluminum material is preferably an elongated material. Because the degree of processing in the manufacturing process of an elongated material is greater than for a forged material, a cast product, or the like, second-phase particles tend to be split during the manufacturing process. Therefore, the aluminum material constituted from an elongated material can increase the number of Si particles, Si series intermetallic compounds, Al series intermetallic compounds, and the like that have been dispersed within the Al matrix. As a result, brazeability can be improved and strength can be increased in a well-balanced manner.

In the situation in which the aluminum material constituted from an elongated material will be fabricated, a continuous-casting method, such as, for example, a twin-roll continuous casting and hot rolling method or a double-belt continuous casting method, can be used. A continuous-casting method can increase the cooling rate during casting compared to a DC-casting method. Therefore, numerous fine second-phase particles, such as Si particles, can be formed in the aluminum material. Furthermore, by dispersing numerous fine second-phase particles in the aluminum material, it is possible to increase the amount of melt formed during brazing heating and thereby improve brazeability.

In the situation in which the aluminum material will be fabricated by a twin-roll continuous casting and hot rolling method, it is preferable that the casting speed be 0.5 m/min or more and 3 m/min or less. By setting the casting speed to 0.5 m/min or more in the twin-roll continuous casting and hot rolling method, the cooling rate during casting is sufficiently high, and the second-phase particles in the aluminum material can easily be made finer. In addition, by setting the casting speed to 3 m/min or less, the molten metal can be sufficiently cooled and solidified during casting.

In addition, the temperature of the molten metal during casting is preferably 650°C or more and 800°C or less and more preferably 680°C or more and 750°C or less. By setting the temperature of the molten metal preferably to 650°C or more and more preferably to 680°C or more, it is possible to avoid the formation of very large crystallized products in the molten metal. In addition, by setting the temperature of the molten metal preferably to 800°C or less and more preferably to 750°C or less, the molten metal can be sufficiently cooled and solidified during casting.

The thickness of the rolled sheet obtained by casting is preferably 2 mm or more and 10 mm or less and more preferably 4 mm or more and 8 mm or less. By making the thickness of the rolled sheet preferably to be 2 mm or more and more preferably to be 4 mm or more, a robust rolled sheet can be stably manufactured. In addition, by making the thickness of the rolled sheet preferably to be 10 mm or less and more preferably to be 8 mm or less, it becomes easy to take up the cast rolled sheet onto a roll.

A rolled sheet obtained by a continuous-casting method may be used, as is, as the aluminum material. In addition, by adjusting the thickness and temper of the rolled sheet by performing cold rolling, heat treatment, or the like, the aluminum material having the desired thickness and temper can be obtained. The aluminum material may have, for example, a temper indicated by the temper designation O, H1n, or H2n. From the viewpoint of curtailing erosion during brazing, the aluminum material preferably has a temper indicated by the temper designation H1n or H2n.

In addition, the aluminum material constituted from an elongated material may be fabricated, for example, by a method wherein an ingot is fabricated by DC casting and then subjected to elongation work. In the situation in which an ingot is fabricated by DC casting, the casting speed is preferably 20 mm/min or more and 100 mm/min or less and more preferably 30 mm/min or more and 80 mm/min or less. By setting the casting speed in the DC casting preferably to 20 mm/min or more and more preferably to 30 mm/min or more, the cooling rate during casting can be made sufficiently high, and the second-phase particles in the aluminum material can easily be made finer. In addition, by setting the casting speed preferably to 100 mm/min or less and more preferably to 80 mm/min or less, the molten metal can be sufficiently cooled and solidified during casting.

In the situation in which a slab is fabricated by DC casting, the thickness of the slab is preferably 600 mm or less and more preferably 500 mm or less. In this situation, the cooling rate during casting is sufficiently high, and the second-phase particles in the aluminum material can easily be made finer.

After fabricating an ingot by DC casting, an aluminum material having the desired shape can be obtained by performing elongation work on the ingot. For example, after fabricating a slab by DC casting, the aluminum material composed of a rolled sheet having the desired thickness can be obtained by performing rolling on the slab. Hot rolling and cold rolling may be performed in combination, as appropriate, as the rolling. In addition, the temper of the aluminum material can also be adjusted by performing a heat treatment, such as a homogenization treatment or an annealing treatment, as necessary, in the period from before rolling is performed to after the rolling process is finished. The aluminum material may have, for example, a temper indicated by the temper designation O, H1n, or H2n. From the viewpoint of curtailing erosion during brazing, the aluminum material preferably has a temper indicated by the temper designation H1n or H2n.

In addition, after fabricating a billet by DC casting, the aluminum material composed of an extruded material having the desired cross-sectional shape can be obtained by performing hot extrusion on the billet. A homogenization process may be performed on the billet, as necessary, prior to performing hot extrusion. The billet is cast by a casting method such as a hot-top casting method or a GDC casting method.

In the manufacturing method, virgin aluminum, intermediate alloys, and scrap aluminum material can be used as casting materials during casting. Scrap aluminum materials used as casting materials include, for example: discarded aluminum products; aluminum parts separated from discarded products; and leftover material, chips, and the like generated by the process of manufacturing aluminum products or aluminum parts. In the situation in which scrap aluminum material is used as a casting material, the scrap aluminum material may be melted as is. In addition, it may be melted after the size of the scrap aluminum material has been modified by cutting or compressing the scrap aluminum material. Furthermore, after recycled aluminum metal has first been produced from the scrap aluminum material, the recycled aluminum metal may be used as a casting material.

(Aluminum Structure)

An aluminum structure can be obtained by brazing the aluminum material and an opposing material. That is, the aluminum structure comprises the aluminum material, an opposing material joined to the aluminum material, and a brazed joint formed between the aluminum material and the opposing material.

The opposing material, which is joined to the aluminum material, may be constituted from aluminum or an aluminum alloy. For example, the opposing material may be a monolayer material constituted from aluminum or an aluminum alloy that is not capable of forming a brazed joint on its own. In addition, the aluminum-alloy monolayer material for brazing can also be used as the opposing material.

Applications of the aluminum structure are not particularly limited. For example, the aluminum structure may be configured as a heat exchanger. The heat exchanger may be, for example, a condenser or evaporator that is incorporated into an air conditioning apparatus and is for exchanging heat between a heat-transfer medium and outside air. In addition, the heat exchanger may be, for example, a radiator, an oil cooler, or the like, which is incorporated into an automobile.

According to the application, usage conditions, etc., the heat exchanger comprises various types of structural members, such as tubes for circulating the heat-transfer medium, fins for enlarging the heat-exchanging surface area, and tanks and plates for distributing the heat-transfer medium to the plurality of tubes or for collecting heat-transfer medium discharged from the tubes. Furthermore, at least one type of structural member among these structural members may be constituted from the aluminum material.

For example, tubes constituted from the aluminum material and corrugated fins constituted from the aluminum material are alternately layered, and a plate constituted from the aluminum material is disposed farthest outward in the layering direction to fabricate a heat-exchanger core. Next, tanks constituted from the aluminum material are mounted on both ends of the plurality of tubes in the heat-exchanger core to fabricate an assembly. By heating and brazing this assembly, a so-called parallel-flow-type heat exchanger can be obtained.

In addition, in the parallel-flow-type heat exchanger described above, instead of tubes constituted from the aluminum material, for example, tubes constituted from an aluminum alloy, which does not act to form brazed joints, can be used as the tubes. In this situation, the tubes may be extruded materials formed by extrusion, or may be electro-resistance welded pipes obtained by performing electro-resistance welding on a sheet material.

In addition, for example, a so-called laminate-type heat exchanger can be obtained by layering two plates, which are constituted from the aluminum material and have recessed portions, so that a flow path for the heat-transfer medium is formed between the two plates, followed by performing brazing.

In addition, for example, a heat exchanger can be obtained by preparing a heat sink, which is constituted from the aluminum material and provided with a plurality of upright fins on a baseplate, and a jacket, which is constituted from the aluminum material and has a hollow part, and by joining the heat sink to the hollow part of the jacket. Furthermore, an oil cooler or the like can be obtained by layering the heat sink and the jacket.

When fabricating an aluminum structure that includes the aluminum material, first, structural members of the aluminum structure that contain the aluminum material are prepared, and these structural members are assembled to fabricate an assembly. This assembly is heated to generate melt from the aluminum material. An aluminum structure can then be obtained by forming a brazed joint between the aluminum material and the opposing material.

The heating temperature when joining the aluminum material and the opposing material is preferably set such that the liquid-phase fraction of the aluminum material, that is, the ratio of the mass of the melt generated from the aluminum material to the mass of the aluminum material before brazing heating is performed, is greater than 5 mass% and 35 mass% or less, and is more preferably set so that the ratio is 7 mass% or more and 25 mass% or less. By making the liquid-phase fraction of the aluminum material during heating to be within the above-mentioned specific range, a sufficient amount of melt can be generated from the aluminum material and easily form a brazed joint between the aluminum material and the opposing material while curtailing any decrease in the strength of the aluminum material during heating.

In addition, the hold time of the heating temperature when joining the aluminum material and the opposing material is preferably set such that the length of time required for the liquid-phase fraction of the aluminum material to become 5 mass% or more is 30 seconds or more and 3,600 seconds or less, and is more preferably set such that the length of time is 60 seconds or more and 1,800 seconds or less. By setting the hold time of the heating temperature of the aluminum material to be within the above-mentioned specific range, the gap between the aluminum material and the opposing material can be sufficiently filled with the melt generated from the aluminum material while curtailing any decrease in the strength of the aluminum material during heating. It is noted that, because the melt is generated from the entire surface of the aluminum material when joining the aluminum material and the opposing material, the length of the hold time can be set independently of the surface area of the brazed joint formed between the aluminum material and the opposing material.

More specifically, for example, the heating temperature when joining the aluminum material and the opposing material can be set, as appropriate, in a range of 580°C or higher and 620°C or lower. In addition, the hold time of the heating temperature can be set, for example, in a range of 0 min or more and 10 min or less and preferably 30 seconds or more and 5 min or less, as appropriate. Here, "hold time" refers to the time that has elapsed since the point in time at which the heating temperature reached the desired temperature. In the situation in which the hold time of the heating temperature is 0 min, heating may be ended and cooling of the aluminum structure may be started immediately after the heating temperature has reached the desired length of time.

The liquid-phase fraction of the aluminum material described above can be determined, in accordance with the principle of the lever (lever rule), based on the equilibrium diagram thereof at the desired temperature. An already well-known equilibrium diagram may be used as the equilibrium diagram used to calculate the liquid-phase fraction, or an equilibrium diagram created by software for calculating equilibrium diagrams may be used. For example, the "THERMO-CALC®" thermodynamic computational system, made by Thermo-Calc Software AB, or the like can be used as software of this type.

Although the atmosphere when joining the aluminum material and the opposing material is not particularly limited, from the viewpoint of curtailing unnecessary oxidation of the aluminum structure, it is preferable that the atmosphere be a nonoxidative atmosphere of nitrogen, argon, or the like. In addition, it is also possible to join the aluminum material and the opposing material by heating the assembly in a reduced-pressure atmosphere.

From the viewpoint of further increasing the brazeability of the aluminum material and the opposing material, flux may be disposed in advance at the portions where brazed joints are to be formed in the assembly, after which the assembly may be heated to perform brazing. Compounds used as fluxes for brazing aluminum-for example, fluoride-based fluxes such as $KAlF_4$, $K_2AlF_5$, $K_2AlF_5 \cdot H_2O$, $K_3AlF_6$, $AlF_3$, $KZnF_3$, and $K_2SiF_6$, cesium-based fluxes such as $Cs_3AlF_6$, $CsAlF_4 \cdot 2H_2O$, and $Cs_2AlF_5 \cdot H_2O$, and chloride-based fluxes-can be used as the flux.

In addition, after having formed, in advance, a Zn thermal spray coating, a flux that includes Zn atoms, a Zn powder, a Zn plated film, or the like on the surface of one or more of the structural members of the aluminum structure, heating can be performed and the aluminum material and the opposing material can be joined. In this situation, the corrosion resistance of the aluminum structure can be further improved. From the same viewpoint, a surface treatment, such as a chromate treatment or a non-chromate treatment, may be performed on the aluminum structure after heating.

(Working Examples)

Working examples of the aluminum-alloy monolayer material for brazing will be explained below. The aluminum-alloy material has a chemical composition that contains: Si: 2.0 mass% or more and 3.0 mass% or less; Fe: 0.05 mass% or more and 0.40 mass% or less; Cu: 0.05 mass% or more and 0.25 mass% or less; Mn: 0.8 mass% or more and 1.6 mass% or less; and Zn: 1.0 mass% or more and 3.0 mass% or less, the balance being Al and unavoidable impurities; wherein the ratio of the Fe content to the Cu content is 1.2 or more and 5.0 or less; the total of the Fe content and the Cu content is 0.25 mass% or more and 0.65 mass% or less; and the ratio of the Cu content to the Zn content is 0.02 or more and 0.40 or less. More specific compositions of the aluminum material will be explained below, along with the manufacturing method.

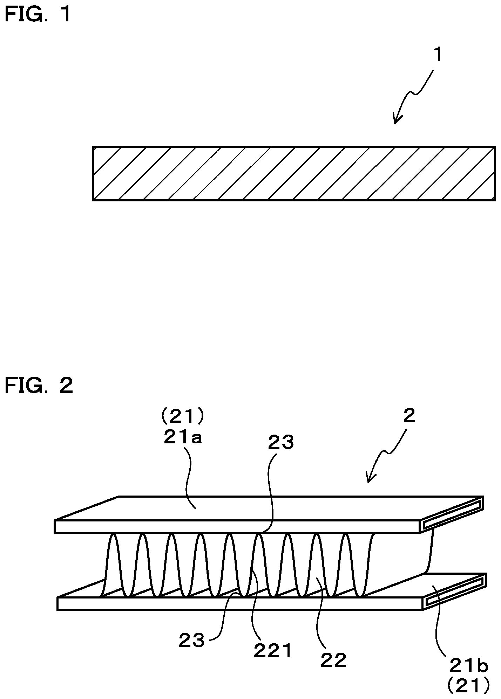

As shown in FIG. 1, an aluminum material 1 according to the present examples is a sheet material having a monolayer structure composed of an aluminum alloy having a function that forms brazed joints. In addition, the aluminum material 1 according to the present example has a metallographic structure composed of a non-fibrous structure. The aluminum material 1 can be prepared, for example, by rolling a cast plate that had been prepared by a twin-roll continuous casting and hot rolling method. Specifically, cast plates having the chemical compositions shown in Table 1 are first prepared using the twin-roll continuous casting and hot rolling method. The temperature of the molten metal during casting may be appropriately set, for example, within the range of 650°C-800°C. Although the dimensions of the cast plates are not particularly limited, for example, the thickness is 6 mm.

It is noted that the symbol "Bal." in Table 1 indicates the balance. In addition, in Table 1, the ratio of the Fe content to the Cu content is listed in the "Fe/Cu" column, the total of the Fe content and the Cu content is listed in the "Fe + Cu" column, and the ratio of the Cu content to the Zn content is listed in the "Cu/Zn" column.

Thereafter, cold rolling is performed on the cast plates to fabricate rolled sheets having a thickness of 0.100 mm. These rolled sheets are held at a temperature of 380°C for 3 hours to perform intermediate annealing, and cold rolling is then performed to reduce the thicknesses of the rolled sheets to 0.070 mm. As a result of the above, Test Material S1 and Test Material S2 shown in Table 1 can be obtained. It is noted that Test Material R1 and Test Material R2 shown in Table 1 are test materials for comparison with Test Material S1 and Test Material S2. The formation of Test Material R1 and Test Material R2 are the same as those of Test Material S1 and Test Material S2, apart from having the chemical compositions shown in Table 1.

Next, evaluation methods of the various characteristics of the aluminum materials will be described.

• Average crystal grain size

In an evaluation of average crystal grain size, a pre-brazing-heating test piece and a post-brazing-heating test piece are prepared as follows. First, the test materials are cut and flat sheets having a length of 300 mm and a width of 150 mm are collected. Small pieces of 20 mm in length and 15 mm in width are collected from these flat sheets and used as pre-brazing-heating test pieces.

Separately, a flat sheet having a length of 300 mm and a width of 150 mm is prepared, and this flat sheet is held at a temperature of 580°C or more and 600°C or less in a nitrogen atmosphere for 3 min. Small pieces having a length of 20 mm and a width of 15 mm are collected from the heated flat sheet and used as post-brazing-heating test pieces.

The test pieces prepared as described above are ground in the thickness direction and then subjected to mirror polishing to expose central faces in the thickness direction of the test pieces. Subsequently, after the crystal-grain boundaries were exposed by etching the central faces, the central faces are observed using a polarizing microscope. Three evaluation regions were then set at portions, which represent the metallographic structures, on the central faces of the test pieces, and polarized microscope images of these regions are obtained. It is noted that the magnification of the polarizing microscope is 50 times.

Using the polarizing microscope images obtained in this manner, the average crystal grain sizes of the test materials are calculated using a method in accordance with the sectioning method stipulated in JIS G0551 (2020). Specifically, concentric circles having diameters of 79.58 mm, 53.05 mm, and 26.53 mm are drawn on the polarized microscope images, and the numbers of crystal grains intersecting these circles are counted. Then, the value obtained by dividing the sum of the circumferential lengths of the three circles described above by the number of crystal grains is taken as the average crystal grain size. That is, average grain size d (unit: $\mu$m) is represented by the following formula, using the number n (unit: individual grains) of crystal grains intersecting the circles and the observation magnification X (unit: times) of the polarizing microscope.

$$d = 1,000\pi(79.58 + 53.05 + 26.53)/nX$$

In Table 2 the average crystal grain sizes of the pre-brazing-heating test pieces and the post-brazing-heating test pieces are shown.

• Tensile strength of pre-brazing aluminum material

Using each test material, a tension test is performed using a method in accordance with JIS Z 2241: 2011. It is noted that, in the tension tests, the pulling rate is 10 mm/min and the gauge length is 50 mm. The tensile strength of the test materials is determined based on stress-strain curves obtained from the tension tests. The tensile strengths of the pre-brazing-heating test materials are shown in Table 2.

• Tensile strength of post-brazing aluminum material

Tension tests are performed using a method in accordance with JIS Z 2241: 2011 using test materials after they had been held at a temperature of 580°C or more and 600°C or less in a nitrogen atmosphere for 3 min and subjected to heating equivalent to brazing. It is noted that, in the tension tests, the pulling rate is 10 mm/min and the gauge length is 50 mm. The tensile strength of the test materials is determined based on stress-strain curves obtained from the tension tests. The tensile strengths of the post-brazing-heating test materials are shown in Table 2.

• Brazeability

The mini-core test specimen 2 shown in FIG. 2 is used in a brazeability evaluation. The mini-core test specimen 2 comprises two tubes 21 and a corrugated fin 22 interposed between the tubes 21. In addition, the tubes 21 and the corrugated fin 22 are joined by brazed joints 23. The tubes 21 in the present example are specifically constituted from an aluminum alloy, and approximately 8 g/m$^2$ of a Zn thermal spray coating is provided on the surfaces of the tubes 21. In addition, the width of the tubes 21 is 16 mm and the length is 40 mm.

The corrugated fin 22 is constituted from one of Test Materials S1, S2, R1, and R2 shown in Table 1. The width of the corrugated fin 22 is 16 mm, the peak height thereof is 10 mm, and the pitch thereof is 3.0 mm.

When fabricating the mini-core test specimen 2, the corrugated fin 22 is first disposed between the two tubes 21 to fabricate an assembly (not shown). After the assembly was secured using a stainless steel jig, the assembly is immersed in a 10% suspension of a fluoride-based flux. Thereafter, the fluoride-based flux is adhered to the surface of the assembly by drying the assembly. Brazed joints 23 are formed between the tubes 21 and the corrugated fin 22 by placing the assembly, with the fluoride-based flux adhered thereto, in a brazing furnace and holding the assembly at a temperature of 580°C or more and 600°C or less in a nitrogen atmosphere for 3 min.

After the brazed mini-core test specimen 2 was cut in the center along the longitudinal direction of the tubes 21, it is then further cut in the center along the width direction of the tubes 21 to expose the cross section of the brazed joints 23. Then, the brazed joints 23 at three locations are randomly selected from among the plurality of brazed joints 23 formed between a first tube 21a, out of the two tubes 21 (21a, 21b), and the corrugated fins 22, and the cross-sectional areas of these brazed joints 23 are measured. Similarly, the brazed joints 23 at three locations are selected from among the plurality of brazed joints 23 formed between a second tube 21b, out of the two tubes 21, and the corrugated fin 22, and the cross-sectional areas of these brazed joints 23 are measured. The arithmetic-average values of the cross-sectional areas of the brazed joints 23 at the six locations obtained as described above are shown in the "Average Fillet Surface Area" column in Table 2.

• Post-brazing natural electrode potential

In the same manner as in the brazing assessment described above, a tube-interior test specimen for measuring the natural electrode potential in the interior of the tube 21, a tube-surface test specimen for measuring the natural electrode potential on the surface of the tube 21, a fin test specimen for measuring the natural electrode potential of the corrugated fin 22, and a fillet test specimen for measuring the natural electrode potential of the brazed joints 23 are prepared from the mini-core test specimen 2 as follows.

When fabricating the tube-interior test specimen, after the corrugated fin 22 is first cut out of the mini-core test specimen 2, the first tube 21a is removed. After the surface of the tube 21a was polished to strip the Zn thermal spray coating, degreasing and rinsing of the tube 21a is performed using acetone. Subsequently, a square electric-potential measurement portion having a length of 10 mm per side is established on the surface of the tube 21a after the Zn thermal spray coating had been stripped therefrom, and the portions other than the electric-potential measurement portion and other than one end surface of the tube 21a are covered with a silicone sealant. As a result of the above, a tube-interior test specimen can be obtained.

When fabricating the tube-surface test specimen, after the corrugated fin 22 is cut out of the mini-core test specimen 2, the first tube 21a is removed. After degreasing and rinsing the tube 21a was performed with acetone, a portion of the Zn thermal spray coating provided on the surface of the tube 21a between the brazed joint 23 at any one location and the brazed joint 23 located adjacent to that brazed joint 23 is specified, and this portion is used as an electric-potential measurement portion. That is, the electric-potential measurement portion of the tube-surface test specimen is a portion corresponding to one pitch of the corrugated fins 22 on the surface of the tube 21a. The portions other than the electric-potential measurement portion established in this manner and other than one end surface of the tube 21a are covered with a silicone sealant. As a result of the above, a tube-surface test specimen can be obtained.

When fabricating the fin test specimen, from among fin general portions 221 of the corrugated fin 22, a fin general portion 221 of the corrugated fin 22 at any one location between the tubes 21a and 21b is first specified, and this portion is used as an electric-potential measurement portion. Next, the corrugated fin 22 of the mini-core test specimen 2 is cut out so as to leave, in the mini-core test specimen 2, one pitch worth of the portion that includes the electric-potential measurement portion. Then, after degreasing and rinsing of the mini-core test specimen 2 was performed with acetone, the portions other than the electric-potential measurement portion and other than the end surface of one of the tubes 21 are covered with a silicone sealant. As a result of the above, a fin test specimen can be obtained.

When fabricating the fillet test specimen, the corrugated fin 22 is first cut out of the mini-core test specimen 2, and the first tube 21a is removed. Thereafter, the tube 21a is polished to expose the brazed joints 23, and these brazed joints 23 are used as electric-potential measurement portions. After degreasing and rinsing of the tube 21a was performed with acetone, the portions other than the brazed joints 23 and other than one end surface of the tube 21a are covered with a silicone sealant. As a result of the above, a fillet test specimen can be obtained.

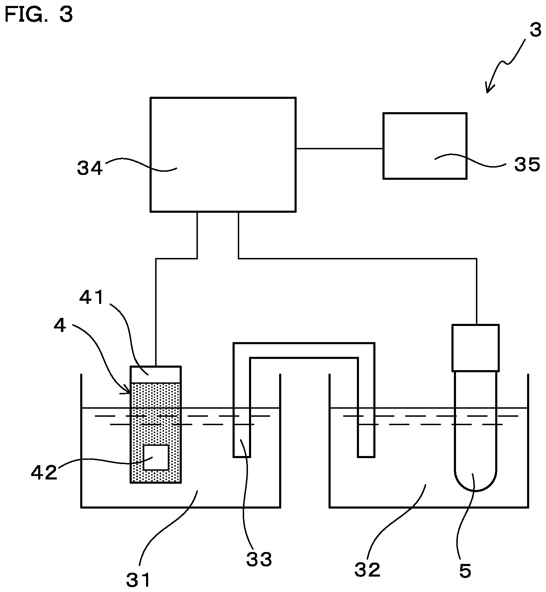

A measuring apparatus 3 as shown in FIG. 3 is used to measure natural electrode potential. The measuring apparatus 3 comprises: a first container 31, into which is introduced a solution in which a test specimen 4 is immersed; a second container 32, into which is introduced a solution in which a reference electrode 5 is immersed; a salt bridge 33 for electrically connecting the solution in the first container 31 and the solution in the second container 32; a potentiostat 34 for measuring the electric potential of the test specimen 4 with respect to the reference electrode 5; and a recording apparatus 35 for recording the measured electric potential. It is noted that the shape of the test specimen 4 is schematically shown in FIG. 3.

Measurement of natural electrode potential is performed as follows. First, a 5% NaCl aqueous solution, which had a pH adjusted to 3 using acetic acid, is prepared in the first container 31, and a saturated NaCl aqueous solution is prepared in the second container 32. The solution in the first container 31 and the solution in the second container 32 are then electrically connected via the salt bridge 33. It is noted that the temperature of each solution is room temperature.

Next, with regard to the test specimen 4, an end surface 41 of the tube 21 and the reference electrode 5, which are not covered by the silicone sealant, are each connected to the potentiostat 34. It is noted that, for example, a saturated calomel electrode (a so-called SCE) can be used as the reference electrode 5.

In this state, the natural electrode potential of an electric potential measurement portion 42 of the test specimen 4 can be measured, using the reference electrode 5 as a reference, by immersing the electric potential measurement portion 42 of the test specimen 4 in the solution in the first container 31 while stirring the solution, and immersing the reference electrode 5 in the saturated NaCl aqueous solution in the second container 32. The arithmetic-average value of the natural electrode potential of each test specimen, from a point in time when 10 hours had elapsed since starting measurement to a point in time when 15 hours had elapsed since starting measurement, is then taken as the natural electrode potential of the fin, the fillet, the tube surface, and the tube interior, respectively. The natural electrode potential of each portion is shown in Table 3. In addition, the electric-potential differential of the tube surface relative to the fillet is shown in the "Electric-Potential Differential" column in Table 3.

• Corrosion resistance

Using the mini-core test specimen 2 obtained by the method described above, a SWAAT test is carried out using a method in accordance with ASTM-G85-A3. It is noted that the test period is either 40 days or 55 days. After the mini-core test specimen of the competed test was rinsed with acid, corrosion resistance can be evaluated based on the presence/absence of peeling of the corrugated fin 22 from the tubes 21.

In the "Corrosion Resistance" column of Table 3, the symbol "A" was recorded if peeling of the corrugated fin 22 did not occur when the SWAAT test had been continued for 55 days, the symbol "B" was recorded if peeling of the corrugated fin 22 did not occur when it had been continued for 40 days but did occur when it had been continued for 55 days, and the symbol "C" was recorded if peeling of the corrugated fin 22 occurred when it had been continued for 40 days.

[Table 1]

(Table 1)

| Test Material Symbol | Chemical composition (mass%) | | | | | | | | | |
|---|---|---|---|---|---|---|---|---|---|---|
| | Si | Fe | Cu | Mn | Zn | Ti | Al | Fe/Cu | Fe+Cu | Cu/Zn |
| S1 | 2.5 | 0.20 | 0.07 | 1.2 | 1.5 | 0.02 | Bal. | 2.9 | 0.27 | 0.05 |
| S2 | 2.5 | 0.20 | 0.15 | 1.2 | 1.5 | 0.02 | Bal. | 1.3 | 0.35 | 0.10 |
| R1 | 2.4 | 0.19 | 0.02 | 1.2 | 1.5 | 0.02 | Bal. | 9.5 | 0.21 | 0.01 |
| R2 | 2.4 | 0.30 | 0.01 | 1.2 | 1.4 | 0.02 | Bal. | 30.0 | 0.31 | 0.01 |

[Table 2]

(Table 2)

| Test Material Symbol | Average Crystal Grain Size ($\mu$m) | | Tensile Strength (MPa) | | Average Fillet Surface Area ($\mu$m$^2$) |
|---|---|---|---|---|---|
| | Before Heating | After Heating | Before Heating | After Heating | |
| S1 | 869 | 951 | 221 | 156 | 10,010 |
| S2 | 768 | 740 | 224 | 167 | 11,027 |
| R1 | 1,052 | 1,110 | 205 | 152 | 8,437 |
| R2 | 768 | 714 | 212 | 150 | 9,093 |

[Table 3]

(Table 3)

| Test Material Symbol | Natural Electrode Potential (mV vs. SCE) | | | | Electric-Potential Differential (mV) | Corrosion Resistance |
|---|---|---|---|---|---|---|
| | Fin | Fillet | Tube Surface | Tube Interior | | |
| S1 | -742 | -831 | -784 | -710 | 47 | B |
| S2 | -733 | -787 | -781 | -710 | 6 | A |

(continued)

| Test Material Symbol | Natural Electrode Potential (mV vs. SCE) | | | | Electric-Potential Differential (mV) | Corrosion Resistance |
|---|---|---|---|---|---|---|
| | Fin | Fillet | Tube Surface | Tube Interior | | |
| R1 | -788 | -875 | -776 | -710 | 99 | C |
| R2 | -795 | -859 | -752 | -709 | 107 | C |

As shown in Table 1, Test Material S1 and Test Material S2 have the above-mentioned specific chemical compositions. Therefore, as shown in Table 2, Test Material S1 and Test Material S2 have brazeability that excelled and have high strength pre- and post-brazing. In addition, Test Material S1 and Test Material S2 can maintain the corrosion resistance of the aluminum structure over long periods of time, as shown in Table 3. Among these test materials, because Test Material S1 has a lower total Fe content and Cu content than Test Material S2, it excelled in post-brazing-heating formability.

On the other hand, because the Cu content of Test Material R1 is less than the above-mentioned specific range, the liquid-phase fraction during brazing heating is low. Therefore, Test Material R1 is inferior in brazeability than Test Material S1 and Test Material S2, as shown in Table 2. In addition, because the Cu content and the total of the Fe content and Cu content of Test Material R1 are less than the above-mentioned specific ranges, the strength thereof is lower than that of Test Material S1 and Test Material S2, as shown in Table 2. Furthermore, because the Cu/Zn value of Test Material R1 is less than the above-mentioned specific range, the electric potential of the brazed joint tends to decrease excessively, as shown in Table 3. Therefore, aluminum structures that contain Test Material R1 are inferior in corrosion resistance.

Because Test Material R2 as well, like Test Material R1, has a Cu content that is less than the above-mentioned specific range, it is inferior in brazeability than Test Material S1 and Test Material S2, as shown in Table 2. In addition, because the Cu content of Test Material R2 is less than the above-mentioned specific range, the strength thereof is lower than that of Test Material S1 and Test Material S2, as shown in Table 2. Furthermore, because the Cu/Zn value of Test Material R2 is less than the above-mentioned specific range, the electric potential of the brazed joint tends to decrease excessively, as shown in Table 3. Therefore, aluminum structures that contain Test Material R2 are inferior in corrosion resistance.

Although embodiments of the aluminum-alloy monolayer material for brazing and aluminum structures that contain the aluminum-alloy monolayer material for brazing according to the present invention were described above based on the working examples, the specific embodiments of the aluminum-alloy monolayer material for brazing and aluminum structures that contain the aluminum-alloy monolayer material for brazing according to the present invention are not limited to the embodiments in the working examples, and the compositions and structures thereof can be modified, as appropriate, within a scope that does not depart from the gist of the present invention.

**Claims**

1. An aluminum-alloy monolayer material for brazing having:

    a chemical composition that contains: Si: 2.0 mass% or more and 3.0 mass% or less; Fe: 0.05 mass% or more and 0.40 mass% or less; Cu: 0.05 mass% or more and 0.25 mass% or less; Mn: 0.8 mass% or more and 1.6 mass% or less; and Zn: 1.0 mass% or more and 3.0 mass% or less, the balance being Al and unavoidable impurities; wherein:

    the ratio of the Fe content to the Cu content is 1.2 or more and 5.0 or less;
    the total of the Fe content and the Cu content is 0.25 mass% or more and 0.65 mass% or less; and
    the ratio of the Cu content to the Zn content is 0.02 or more and 0.40 or less.

2. The aluminum-alloy monolayer material for brazing according to claim 1, wherein the aluminum-alloy material further contains Mg: greater than 0 mass% and 2.0 mass% or less.

3. The aluminum-alloy monolayer material for brazing according to claim 1 or 2, wherein the aluminum-alloy material further contains one or more elements selected from the group consisting of Cr: greater than 0 mass% and 0.3 mass% or less, Ti: greater than 0 mass% and 0.3 mass% or less, and Zr: greater than 0 mass% and 0.3 mass% or less.

4. The aluminum-alloy monolayer material for brazing according to any one of claims 1-3, wherein the aluminum-alloy material further contains one or more elements selected from the group consisting of In: greater than 0 mass% and 0.3 mass% or less, Sn: greater than 0 mass% and 0.3 mass% or less, V: greater than 0 mass% and 0.3 mass% or less, Ni: greater than 0 mass% and 2.0 mass% or less, Be: greater than 0 mass% and 0.3 mass% or less, Sr: greater than 0 mass% and 0.3 mass% or less, Bi: greater than 0 mass% and 0.3 mass% or less, and Na: greater than 0 mass% and 0.3 mass% or less.

5. An aluminum structure comprising:

the aluminum-alloy monolayer material for brazing according to any one of claims 1-4;
an opposing material joined to the aluminum-alloy monolayer material for brazing; and
a brazed joint formed between the aluminum-alloy monolayer material for brazing and the opposing material.

6. A heat exchanger constituted from the aluminum structure according to claim 5.

7. A method of manufacturing the aluminum-alloy monolayer material for brazing according to any one of claims 1-4, wherein scrap aluminum material is used as at least a portion of a casting material.

FIG. 1

FIG. 2

FIG. 3

# EP 4 524 274 A1

<table>
<tr><td align="center">INTERNATIONAL SEARCH REPORT</td><td>International application No.<br><br>**PCT/JP2023/021898**</td></tr>
</table>

**A. CLASSIFICATION OF SUBJECT MATTER**

*C22C 21/00*(2006.01)i; *F28F 21/08*(2006.01)i; *B23K 35/28*(2006.01)i
FI:  C22C21/00 D; C22C21/00 J; B23K35/28 310A; F28F21/08 A

According to International Patent Classification (IPC) or to both national classification and IPC

**B. FIELDS SEARCHED**

Minimum documentation searched (classification system followed by classification symbols)

C22C21/00-21/18; F28F21/08; B23K35/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/179625 A1 (UACJ CORP.) 19 October 2017 (2017-10-19) | 1-6 |
| Y | paragraphs [0031]-[0047], examples, table 1, alloy symbols A17, A18 | 7 |
| X | WO 2014/196183 A1 (UACJ CORP.) 11 December 2014 (2014-12-11) | 1-6 |
| Y | paragraphs [0055]-[0076], examples, table 1, no. F3 | 7 |
| X | WO 2018/047971 A1 (UACJ CORP.) 15 March 2018 (2018-03-15) | 1-6 |
| Y | paragraphs [0015]-[0061], examples, table 4, E4-1 | 7 |
| Y | JP 2020-514556 A (NOVELIS INC.) 21 May 2020 (2020-05-21)<br>claims, paragraphs [0001]-[0009] | 7 |
| Y | JP 9-302432 A (THE FURUKAWA ELECTRIC CO., LTD.) 25 November 1997 (1997-11-25)<br>paragraphs [0001]-[0043], table 1, no. 1 | 7 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/021898**

| Patent document cited in search report | | | Publication date (day/month/year) | Patent family member(s) | | | Publication date (day/month/year) |
|---|---|---|---|---|---|---|---|
| WO | 2017/179625 | A1 | 19 October 2017 | US 2019/0162492 A1<br>paragraphs [0051]-[0082], examples, table 1, alloy symbols A17, A18<br>EP 3444368 A1<br>KR 10-2018-0126465 A<br>CN 109072350 A | | | |
| WO | 2014/196183 | A1 | 11 December 2014 | US 2016/0116234 A1<br>paragraphs [0087]-[0123], examples, table 1, no. F3<br>EP 3006888 A1<br>CN 105264327 A<br>KR 10-2016-0015229 A | | | |
| WO | 2018/047971 | A1 | 15 March 2018 | JP 2018-44694 A<br>paragraphs [0015]-[0061], examples, table 4, E4-1 | | | |
| JP | 2020-514556 | A | 21 May 2020 | WO 2018/175876 A1<br>claims, p. 1, line 6 to p. 4, line 2<br>US 2018/0274072 A1<br>EP 4067515 A1<br>KR 10-2019-0132445 A<br>CN 111051545 A | | | |
| JP | 9-302432 | A | 25 November 1997 | (Family: none) | | | |

Form PCT/ISA/210 (patent family annex) (January 2015)

**REFERENCES CITED IN THE DESCRIPTION**

**Patent documents cited in the description**

• JP 5337326 B